# DEMANDE DE BREVET EUROPEEN

(11) **EP 2 211 303 A1**
(43) Date de publication de la demande: **28.07.2010**
(21) Numéro de dépôt: 09176137.9
(22) Date de dépôt: 16.11.2009
(51) Int. Cl.: G06T 1/60

(54) **Procédé de traitement d'image pour imprimante multifonctions**

(30) Priorité: 24.12.2008 FR 0859084
(71) Demandeur: SAGEM COMMUNICATIONS SAS, 92500 Rueil Malmaison (FR)
(72) Inventeur: Monnerie, Nicolas, 21800 Quetigny (FR)
(74) Mandataire: Lebkiri, Alexandre

(57) **Abrégé**

La présente invention se rapporte à un procédé de traitement d'une image source composée de pixels pour imprimante multifonctions.

Elle se **caractérise en ce que** le procédé comporte les étapes de :
- Sauvegarder l'image source dans une première mémoire ;
- Sauvegarder dans une double mémoire tampon d'entrée un bloc d'une ligne de blocs et un bloc adjacent d'une ligne de blocs ;
- Sauvegarder dans une deuxième mémoire une colonne de pixels d'une région de traitement du bloc sauvegardé ;
- Appliquer un algorithme de traitement à la région de traitement d'un bloc ;
- Appliquer l'algorithme de traitement à un bloc adjacent dans la ligne en utilisant la colonne de pixels sauvegardée ; et
- Sauvegarder dans une double mémoire tampon de sortie un bloc d'une ligne de blocs et un bloc adjacent d'une ligne de blocs.

## Description

### DOMAINE TECHNIQUE DE L'INVENTION

La présente invention concerne un procédé de traitement d'une image source composée de pixels pour imprimante multifonctions, et un dispositif de traitement permettant de mettre en oeuvre ledit procédé.

Elle trouve une application particulière dans le domaine des produits multifonctions, tels que des imprimantes multifonctions, qui intègrent des dispositifs d'acquisition (scanner), de compression, de stockage et d'impression d'images.

### ARRIÈRE-PLAN TECHNOLOGIQUE DE L'INVENTION

Dans le domaine des imprimantes, un état de la technique connu de procédé de traitement d'une image source composée de pixels pour imprimante multifonctions utilise plusieurs algorithmes de traitement successifs. Pour traiter un ensemble de pixels de l'image, par exemple dans le cas de pages scannées ou encore dans le cas de redimensionnement d'une page, ces algorithmes utilisent des pixels au voisinage desdits pixels traités. A cet effet, une sauvegarde de l'image source est effectuée dans une mémoire externe à un processeur(s) qui gère(nt) les algorithmes de traitement.

Un inconvénient de cet état de la technique est que, les algorithmes devant s'enchaîner successivement, le temps d'exécution global de traitement d'une image est important. Par ailleurs, lors de l'exécution d'un algorithme qui traite des ensembles de pixels successivement, l'accès en mémoire externe au processeur (qu'il soit dédié ou non ou programmable ou non) est très fréquent et augmente également le temps d'exécution global.

### DESCRIPTION GENERALE DE L'INVENTION

La présente invention a pour but un procédé de traitement d'une image source composée de pixels pour imprimante multifonctions qui permet de réduire les accès en mémoire, et de réduire le temps d'exécution des algorithmes de traitement.

Selon un premier objet de l'invention, ce but est atteint par un procédé de traitement d'une image source composée de pixels pour imprimante multifonctions, **caractérisé en ce qu**'il comporte les étapes de :
- Sauvegarder l'image source dans une première mémoire ;
- Sauvegarder dans une double mémoire tampon d'entrée un bloc d'une ligne de blocs de l'image source ;
- Sauvegarder dans une double mémoire tampon d'entrée un bloc adjacent d'une ligne de blocs de l'image source ;
- Sauvegarder dans une deuxième mémoire une colonne de pixels d'une région de traitement du bloc sauvegardé ;
- Appliquer un algorithme de traitement à la région de traitement du bloc sauvegardé ; et
- Appliquer l'algorithme de traitement à une région de traitement du bloc adjacent sauvegardé en utilisant la colonne de pixels sauvegardée.

Comme on va le voir en détail par la suite, l'utilisation de blocs, de doubles mémoires tampons, et d'une colonne de pixels, va permettre de prendre en compte des pixels de voisinage tout en réduisant le temps de traitement global d'une image source, notamment car plusieurs blocs de pixels vont pouvoir être traités en parallèle et les accès en première mémoire vont être réduits.

Selon des modes de réalisation non limitatifs, le procédé peut comporter en outre une ou plusieurs caractéristiques supplémentaires parmi les suivantes :
- Le procédé comporte une sous-étape supplémentaire d'utiliser au moins un pixel de la colonne de pixels sauvegardée pour traiter un pixel d'une ligne de pixels du bloc adjacent lorsque ce dernier est traité par l'algorithme de traitement. Cela permet ainsi de traiter un pixel avec les pixels de voisinage lorsque ces derniers sont nécessaires dans un algorithme de traitement.
- La région de traitement d'un bloc adjacent est adjacente à la région de traitement d'un bloc. Cela permet de traiter une image source en entier sans perte d'information.
- L'étape de sauvegarde dans une double mémoire tampon d'entrée d'un bloc adjacent s'effectue en parallèle de l'étape d'application d'un algorithme de traitement à la région de traitement d'un bloc. Cela permet d'améliorer le temps d'exécution global.
- Le procédé comporte une étape supplémentaire de lire une ligne de pixels d'une ligne de blocs adjacente appartenant également à la ligne de blocs. Cela permet d'avoir un recouvrement de lignes de blocs et donc de traiter une image source en entier sans perte d'information.
- Le procédé comporte en outre les étapes supplémentaires de :
   - Sauvegarder dans une double mémoire tampon de sortie le bloc traité ; et
   - Sauvegarder dans une double mémoire tampon de sortie le bloc adjacent traité.
   Cela permet de rendre disponible les blocs traités pour un autre algorithme de traitement.
- Une double mémoire tampon est partagée entre un algorithme de traitement et un autre algorithme de traitement. Cela permet d'effectuer des algorithmes de traitement en parallèle.

Selon un deuxième objet de l'invention, elle concerne un dispositif de traitement d'une image source composée de pixels pour imprimante multifonctions, **caractérisé en ce qu**'il comporte :
- Une unité de contrôle pour :
   - Sauvegarder l'image source dans une première mémoire ;
   - Sauvegarder dans une double mémoire tampon d'entrée un bloc d'une ligne de blocs de l'image source ;
   - Sauvegarder dans une double mémoire tampon d'entrée un bloc adjacent d'une ligne de blocs de l'image source ;
   - Sauvegarder dans une deuxième mémoire une colonne de pixels d'une région de traitement du bloc sauvegardé ;
   - Appliquer un algorithme de traitement à la région de traitement du bloc sauvegardé ;
   - Appliquer l'algorithme de traitement à une région de traitement du bloc adjacent sauvegardé en utilisant la colonne de pixels sauvegardée.

Selon des modes de réalisation non limitatifs, le dispositif peut comporter en outre une ou plusieurs caractéristiques supplémentaires parmi les suivantes :
- Le dispositif comporte en outre une double mémoire tampon de sortie pour sauvegarder :
   - Le bloc traité ; et
   - Le bloc adjacent.
- La région de traitement d'un bloc adjacent est adjacente à la région de traitement d'un bloc.
- Le dispositif comporte en outre une double mémoire tampon partagée entre l'algorithme de traitement et un autre algorithme de traitement.
- Le dispositif comporte en outre :
   - Un dispositif de lecture/écriture apte à coopérer avec une première mémoire de sauvegarde de l'image source ;
   - Une double mémoire tampon d'entrée pour sauvegarder :
      - Un bloc d'une ligne de blocs de l'image source ; et
      - Un bloc adjacent d'une ligne de blocs de l'image source ; et
   - Une deuxième mémoire pour sauvegarder une colonne de pixels d'une région de traitement du bloc sauvegardé.

L'invention et ses différentes applications seront mieux comprises à la lecture de la description qui suit et à l'examen des figures qui l'accompagnent.

### BREVE DESCRIPTION DES FIGURES

Celles-ci ne sont présentées qu'à titre indicatif et nullement limitatif de l'invention.
- La figure 1 représente un organigramme selon un mode de réalisation non limitatif du procédé de traitement d'image selon l'invention ;
- La figure 2 représente de manière simplifiée une première décomposition d'une image en blocs pour expliquer le procédé représenté à la figure 1 ;
- La figure 3, représente de façon schématique un pixel d'une image traitée par le procédé représenté à la figure 1, avec des pixels de voisinage ;
- La figure 4, représente de manière simplifiée une deuxième décomposition d'une image en blocs pour expliquer le procédé représenté à la figure 1 ;
- La figure 5 montre un schéma simplifié de mémoires tampons utilisées par un algorithme de traitement, selon une étape du procédé représenté à la figure 1 ;
- La figure 6 montre un exemple non limitatif d'utilisation des mémoires tampons de la figure 5, selon une étape du procédé représenté à la figure 1 ;
- La figure 7 montre un schéma simplifié de mémoires tampons utilisées par plusieurs algorithmes de traitement, selon une étape du procédé représenté à la figure 1 ;
- La figure 8 montre un exemple non limitatif d'utilisation des mémoires tampons de la figure 7, selon une étape du procédé représenté à la figure 1 ;
- La figure 9 montre un schéma simplifié d'un dispositif de traitement d'image permettant de mettre en oeuvre le procédé représenté à la figure 1 ; et
- La figure 10 montre schéma détaillé d'une partie du dispositif de traitement de la figure 9, selon un mode de réalisation non limitatif.

### DESCRIPTION DES FORMES DE REALISATION PRÉFÉRÉES DE L'INVENTION

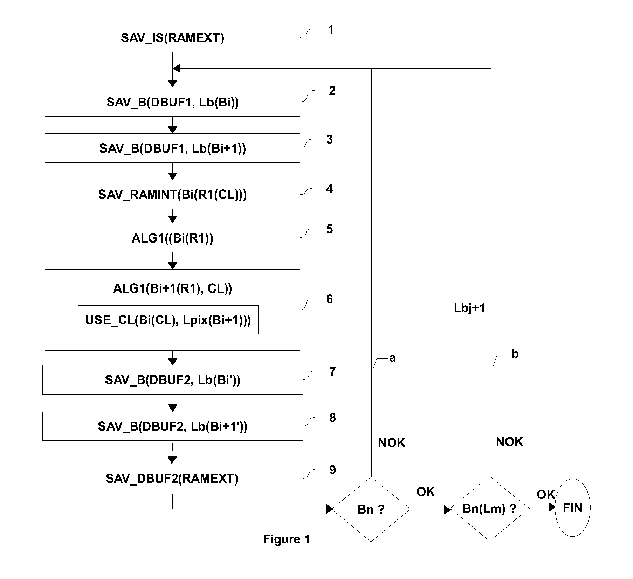

Le procédé de traitement d'une image source composée de pixels pour imprimante multifonctions selon l'invention, est décrit dans un mode de réalisation non limitatif à la figure 1.

Le procédé de traitement comporte les étapes suivantes telles qu'illustrées à la figure 1 :
- Sauvegarder l'image source IS dans une première mémoire RAMEXT (étape SAV_IS(RAMEXT) illustrée à la figure 1) ;
- Sauvegarder dans une double mémoire tampon d'entrée DBUF1 un bloc Bi d'une ligne de blocs Lb de l'image source IS (étape SAV_B(DBUF1, Lb(Bi)) illustrée à la figure 1) ;
- Sauvegarder dans une double mémoire tampon d'entrée DBUF1 un bloc Bi+1 adjacent d'une ligne de blocs Lb de l'image source IS (étape SAV_B(DBUF1, Lb(Bi+1)) illustrée à la figure 1) ;
- Sauvegarder dans une deuxième mémoire RAMINT une colonne de pixels CL d'une région de traitement R1 du bloc sauvegardé Bi (étape SAV_RAMINT(Bi(R1(CL)) illustrée à la figure 1) ;
- Appliquer un algorithme de traitement ALG1 à la région de traitement R1 du bloc sauvegardé Bi (étape ALG1(Bi(R1)) illustré à la figure 1) ; et
- Appliquer l'algorithme de traitement ALG1 à une région de traitement R1 du bloc adjacent sauvegardé Bi+1 en utilisant la colonne de pixels sauvegardée CL (étape ALG1(Bi+1(R1), CL) illustré à la figure 1).

Selon un mode de réalisation non limitatif, le procédé de traitement d'images comporte en outre les étapes supplémentaires de :
- Sauvegarder dans une double mémoire tampon de sortie DBUF2 le bloc traité Bi' (étape SAV_B(DBUF2, Lb(Bi')) illustrée à la figure 1) ;
- Sauvegarder dans une double mémoire tampon de sortie DBUF2 le bloc adjacent traité Bi+1' (étape SAV_B(DBUF1, Lb(Bi+1')) illustrée à la figure 1).

Selon un mode de réalisation non limitatif, le procédé de traitement d'images comporte en outre une sous-étape supplémentaire d'utiliser un pixel de la colonne de pixels sauvegardée CL pour traiter un pixel d'une ligne de pixels Lpix du bloc adjacent Bi+1 lorsque ce dernier est traité par l'algorithme de traitement ALG1 (sous-étape USE_CL(Bi(CL), Lpix(Bi+1)) illustrée à la figure 1)).

Selon un mode de réalisation non limitatif, le procédé de traitement d'images comporte en outre une étape supplémentaire de lire une ligne de pixel Lpix d'une ligne de blocs adjacente Lbj+1 appartenant également à la ligne de blocs Lbj.

Pour la suite de la description, dans le mode de réalisation non limitatif du procédé décrit, le procédé comprend ces étapes supplémentaires.

Les étapes du procédé sont décrites en détail ci-après.

**Dans une première étape 1)**, on sauvegarde l'image source IS dans une première mémoire RAMEXT.

On notera que l'image source IS est acquise selon des méthodes d'acquisition connues de l'homme du métier dans une étape en amont du procédé de traitement décrit. Bien entendu, cette étape pourrait être comprise dans le procédé de traitement décrit.
Dans un exemple non limitatif, on prend une image source IS de 2000*3000 pixels pour la suite de la description.
On rappelle que dans des exemples non limitatifs, à une image source IS acquise sont associées des couleurs RGB, ou encore une composante de couleur de luminance Y et deux composantes de couleur de chrominance UV selon l'espace colorimétrique dans lequel on travaille.

Dans un mode de réalisation non limitatif, la première mémoire RAMEXT est une mémoire à accès lent par rapport à la deuxième mémoire RAMINT, aux doubles mémoires tampons DBUF décrites ci-dessous.

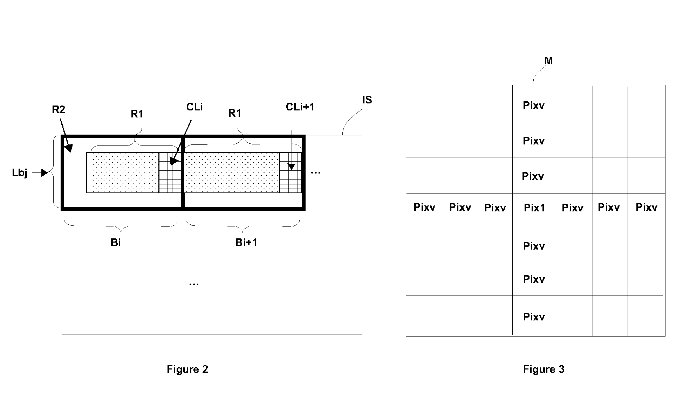

**Dans une deuxième étape 2),** on sauvegarde dans une double mémoire tampon d'entrée DBUF1 un bloc Bi d'une ligne de blocs Lbj de l'image source IS.
On notera qu'une double mémoire tampon DBUF est d'accès plus rapide que la première mémoire RAMEXT.
Dans un mode de réalisation non limitatif, une ligne de blocs Lbj s'étend sur toute la largeur de l'image source IS, soit dans l'exemple pris sur les 2000 pixels, tel qu'illustré sur la figure 2.
Dans un mode de réalisation non limitatif, on choisit la taille N*M d'un bloc Bi en fonction de la taille des doubles mémoires tampons DBUF. On a ainsi un accès optimisé à une double mémoire tampon.
Dans un exemple non limitatif, si la taille d'une double mémoire tampon DBUF est de 128 mots de 32 bits avec un accès mémoire sur 8 mots, on choisit un bloc Bi qui comporte une taille de 32 * 16 pixels.

Dans l'exemple non limitatif pris d'une image source IS de 2000*3000 pixels, on aura ainsi 93*125 blocs entiers sur une ligne de blocs Lbj et 125 lignes de blocs Lb sur toute l'image source IS.
On notera que pour les blocs non entiers, dans un mode de réalisation non limitatif, on ajuste la taille du bloc pour ne traités que les pixels valides.

Bien entendu, selon la technologie des doubles mémoires utilisées DBUF, les nombres N*M peuvent changer.

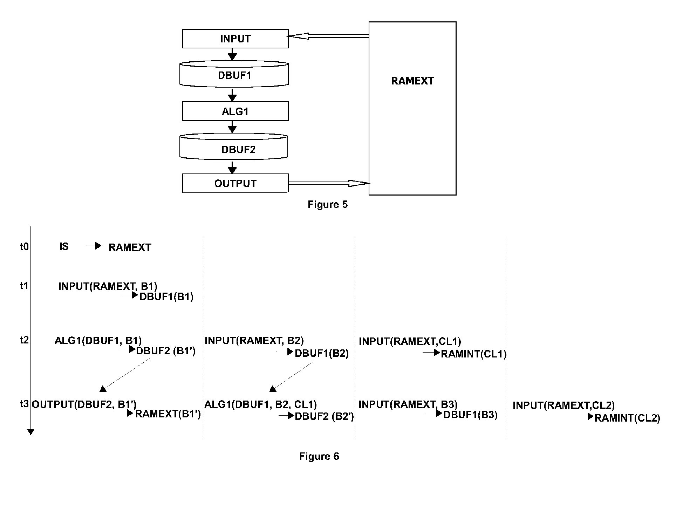

Une double mémoire tampon d'entrée DBUF1 ainsi qu'une double mémoire tampon de sortie DBUF2 sont illustrées de façon schématique sur la figure 5.

**Dans une troisième étape 3),** on sauvegarde dans une double mémoire tampon d'entrée DBUF1 un bloc adjacent Bi+1 d'une ligne de blocs Lbj de l'image source IS.

Le bloc adjacent Bi+1 est adjacent au bloc sauvegardé précédemment Bi, tel qu'illustré sur la figure 2.

**Dans une quatrième étape 4),** on sauvegarde dans une deuxième mémoire RAMINT une colonne de pixels CL d'une région de traitement R1 du bloc sauvegardé Bi.

On notera que la deuxième mémoire RAMINT est d'accès plus rapide que la première mémoire RAMEXT.
Dans un mode de réalisation non limitatif, la région de traitement R1 est définie de sorte à être centrée dans le bloc Bi au niveau des lignes de pixels Lpix, tel qu'illustré sur la figure 2 (zone en pointillés plus zone quadrillée). Dans un exemple non limitatif, elle a une taille de 29*10 pixels.

Par ailleurs la région de traitement R1 délimite une région de voisinage R2, telle qu'illustrée sur la figure 2 également (zone blanche).

Dans un mode de réalisation non limitatif, la colonne de pixels CL de la région de traitement R1 qui est sauvegardée comporte une taille de 3 pixels de large et 10 pixels de long. Bien entendu, cette taille dépend du traitement à appliquer à la région de traitement R1 et des pixels de voisinage qui doivent être utilisés pour traiter un pixel d'un bloc adjacent Bi+1.

**Dans une cinquième étape 5),** on applique un algorithme de traitement ALG1 à la région de traitement R1 du bloc sauvegardé Bi.

Dans un premier exemple non limitatif, dans l'exemple d'application non limitatif d'imprimante multifonctions, l'algorithme de traitement ALG1 est un filtrage pour diminuer le bruit dans l'image source IS et rehausser les contours dans ladite image source IS. Un filtrage symétrique ou de Wiener peut être appliqué dans des exemples non limitatifs.

Bien entendu, cet exemple est non limitatif, et d'autres premiers algorithmes de traitement ALG1 peuvent être appliqués en fonction de l'application utilisée.
Dans un mode de réalisation non limitatif, la quatrième étape est effectuée en parallèle de la cinquième étape. Cela permet d'accélérer le traitement global de l'image source.

**Dans une sixième étape 6)**, on applique l'algorithme de traitement ALG1 à une région de traitement R1 du bloc adjacent sauvegardé Bi+1 en utilisant la colonne de pixels sauvegardée CL.

Dans un mode de réalisation non limitatif, on utilise au moins un pixel de la colonne de pixels sauvegardée CL pour traiter un pixel d'une ligne de pixels Lpix du bloc adjacent Bi+1 lorsque ce dernier est traité par l'algorithme de traitement ALG1.

Ainsi, dans un exemple non limitatif, lors du traitement par l'algorithme de traitement ALG1, le premier pixel Pix de chaque ligne de pixels Lpix de la région de traitement R1 du bloc adjacent Bi+1 utilise les trois pixels Pix de la même ligne de pixel Lpix de la colonne de pixels sauvegardée CL appartenant au bloc Bi.
Cela permet de traiter un pixel du bloc adjacent Bi+1 au moyen des pixels de voisinage qui se trouvent dans le bloc Bi.
Ainsi, comme on peut le voir sur la figure 3, pour le traitement d'un pixel Pix1 par un algorithme de traitement ALG1 qui utilise 3 pixels de voisinage Pixv (en distance de voisinage), on utilise une matrice de pixels de voisinage M de taille 7*7, une partie de ces pixels de voisinage Pixv se trouvant dans la colonne CL sauvegardée.

Bien entendu, selon le type d'algorithme de traitement utilisé ALG1, le nombre de pixels de voisinage Pixv peut être différent de trois. Par exemple on peut utiliser qu'un seul pixel de voisinage Pixv (en distance de voisinage) ce qui revient à utiliser une matrice M de taille 3*3.

**Dans une septième étape 7),** on sauvegarde dans une double mémoire tampon de sortie DBUF2 le bloc traité Bi'.
La double mémoire tampon de sortie DBUF2 est illustrée de façon schématique sur la figure 5.

**Dans une huitième étape 8),** on sauvegarde dans la double mémoire tampon de sortie DBUF2 le bloc adjacent traité Bi+1'.
Le bloc traité Bi' est ainsi disponible pour un autre algorithme de traitement ALG2 par exemple.

**Dans une neuvième étape 9),** on sauvegarde dans la première mémoire RAMEXT le bloc Bi' qui a été traité et qui est sauvegardé dans la double mémoire tampon de sortie DBUF2.
Le bloc traité Bi' est ainsi disponible pour un autre processus (impression, envoie vers un ordinateur).

Un exemple non limitatif des étapes décrites ci-dessus appliquées à un premier bloc B1 et à un bloc adjacent B2 adjacent est illustré sur la figure 6, dans le cas de lignes de blocs Lbj comportant trois blocs B1, B2 et B3.
Comme on peut le voir dans cet exemple,
- **Lors d'un premier temps t0,** l'image source IS est sauvegardée dans la première mémoire RAMEXT ;
- **Lors d'un deuxième temps t1,** le premier bloc B1 de la première ligne de bloc Lb1 est lu à partir de la première mémoire RAMEXT et sauvegardé dans la double mémoire tampon d'entrée DBUF1 ;
- **Lors d'un troisième temps t2,** le deuxième bloc B2 de la première ligne de bloc Lb1 est lu à partir de la première mémoire RAMEXT et sauvegardé dans la double mémoire tampon d'entrée DBUF1 ;
- Dans le même temps t2, on lit dans la double mémoire tampon d'entrée DBUF1 et on sauvegarde dans la deuxième mémoire RAMINT une colonne de pixels CL1 d'une région de traitement R1 du premier bloc B1 ;
- Lors de ce même troisième temps t2, on applique un algorithme de traitement ALG1 à la région de traitement R1 du premier bloc sauvegardé B1 dans la double mémoire tampon DBUF1 et on sauvegarde le bloc traité B1' résultant dans la double mémoire tampon de sortie DBUF2 ;
- **Lors d'un quatrième temps t3,** le troisième bloc B3 de la première ligne de bloc Lb1 est lu à partir de la première mémoire RAMEXT et sauvegardé dans la double mémoire tampon d'entrée DBUF1 ;
- Dans le même temps t3, on lit dans la double mémoire tampon d'entrée DBUF1 et on sauvegarde dans la deuxième mémoire RAMINT une colonne de pixels CL2 d'une région de traitement R1 du deuxième bloc B2 ;
- Dans le même temps t3, on applique l'algorithme de traitement ALG1 à la région de traitement R1 du deuxième bloc sauvegardé B2 dans la double mémoire tampon DBUF1, en utilisant la première colonne sauvegardée CL1, et on sauvegarde le bloc traité B2' résultant dans la double mémoire tampon de sortie DBUF2 ;
- Dans le même temps t3, on lit le premier bloc traité B1' dans la double mémoire tampon de sortie DBUF2 et on le sauvegarde dans la première mémoire RAMEXT.
- Etc.
- et ainsi de suite pour tous les blocs Bn de la première ligne L1 (branche a illustrée sur la figure 1).

Lorsque les régions de traitement R1 de tous les blocs de la première ligne L1 ont été traitées, on passe à la ligne suivante L2. On réitère ainsi les étapes décrites ci-dessus pour toutes les lignes de blocs Lbj de l'image source IS (branche b illustrée sur la figure 1). Lorsque l'on a traité le dernier bloc Bn de la dernière ligne de blocs Lbm, on a fini de traiter toute l'image source IS.

Ainsi, comme on peut le voir, dans un mode de réalisation non limitatif, l'étape de sauvegarde dans une double mémoire tampon d'entrée DBUF1 d'un bloc adjacent Bi+1 s'effectue en parallèle de l'étape d'application d'un algorithme de traitement ALG1 à la région de traitement R1 d'un bloc Bi. Cela permet d'améliorer le temps d'exécution de traitement global de l'image source IS.

On notera que dans un mode de réalisation non limitatif, le procédé comporte en outre une étape supplémentaire de lire une ligne de pixels Lpix d'une ligne de blocs adjacente Lbj+1 appartenant également à la ligne de blocs Lbj.

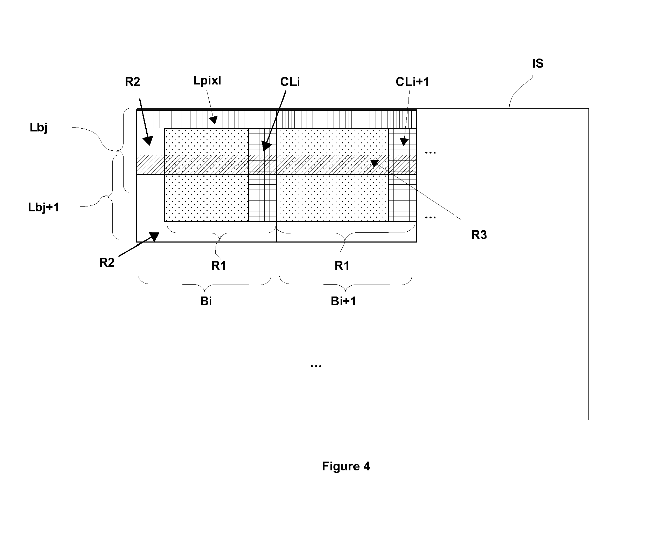

Ainsi, une ligne de blocs de pixels Lbj recouvre partiellement une autre ligne de blocs de pixels Lbj+1, tel qu'illustré sur la figure 4 de sorte à ce que la région de traitement R1 d'un bloc Bi d'une ligne de blocs Lbj soit adjacente à la région de traitement R1 d'un bloc Bi de la ligne de bloc adjacente Lbj+1.

On a ainsi une région de recouvrement R3 qui est définie et illustrée sur la figure 4 (zone hachurée en diagonale) et qui est composée de lignes de pixels Lpix.
Cela permet de traiter toutes les lignes de pixels Lpix de l'image source IS et donc de ne pas perdre d'information par rapport à l'image source IS.
Dans l'exemple pris de trois pixels de voisinage Pixv (matrice M = 7*7), le taux de recouvrement sera de trois lignes de pixels Lpix que l'on appelle ligne de pixels de recouvrement Lpix.
Ainsi, dans cet exemple non limitatif, afin de prendre en compte les pixels de voisinage Pixv se situant sur une ligne de pixels Lpix, on lit deux fois une même ligne de pixels de recouvrement Lpix. Une première fois lorsque l'on traite la ligne de blocs Lbj et une deuxième fois lorsque l'on traite la ligne de blocs adjacente Lbj+1.
Ainsi, le recouvrement des lignes de blocs Lb permet de lire une ligne de pixels Lpix un nombre de fois inférieur à une situation où il n'y a aucun recouvrement de lignes de pixels Lpix. Dans ce dernier cas, on serait obligé de lire une ligne de pixel Lpix sept fois au lieu de deux (matrice M = 7*7).

On notera que dans le cas des trois lignes de pixels limites Lpixl, situés au bord de l'image source IS, tel qu'illustré sur la figure 3 (zone hachurée verticalement), comme il n'existe pas de pixels de voisinage Pixv, dans un mode de réalisation non limitatif, on duplique les trois lignes limites et on considère leurs pixels en tant que pixels de voisinage Pixv.

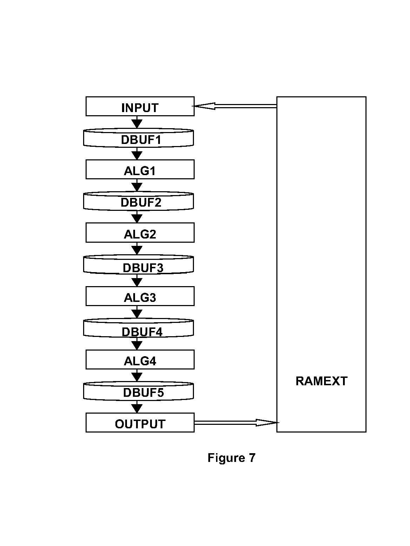

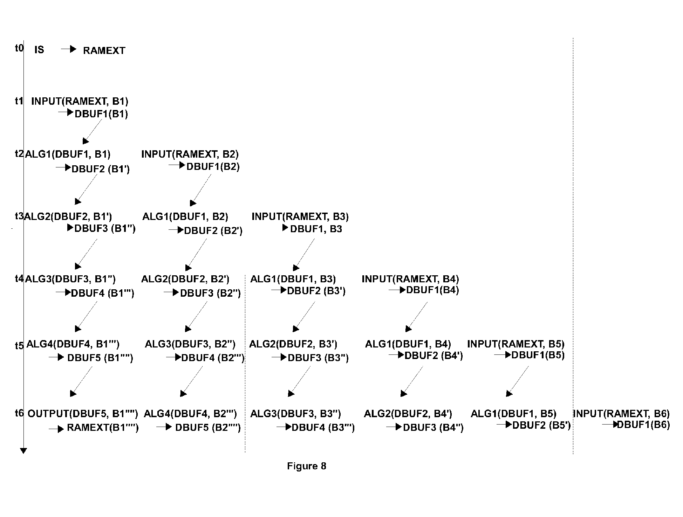

On notera que le procédé décrit s'applique particulièrement dans les cas où plusieurs algorithmes de traitement ALG doivent être effectués sur l'image source IS.
Ainsi, dans ce cas, dans un mode de réalisation non limitatif, un algorithme de traitement ALG1 comporte une double mémoire tampon partagée DBUF2 avec un deuxième algorithme de traitement ALG2 tel qu'illustré sur la figure 7.
Un exemple non limitatif d'application de plusieurs algorithmes de traitement sur une image source IS est donné aux figures 7 et 8.
Comme on peut le voir sur la figure 7 dans cet exemple non limitatif, il y a quatre algorithmes de traitement ALG à appliquer successivement sur une même image source IS qui sont les suivants :
- Un algorithme de traitement de filtrage d'image ALG1 pour diminuer le bruit dans l'image source IS et rehausser les contours dans l'image, tels que dans des exemples non limitatifs, un filtrage symétrique ou de Wiener. Ces exemples d'algorithmes de traitement utilise 3 pixels de voisinage ;
- un deuxième algorithme de traitement de redimensionnement d'image ALG2 pour augmenter ou diminuer la taille de l'image source IS, tel que dans un exemple non limitatif par interpolation bilinéaire. Cet exemple de deuxième algorithme de traitement utilise 1 pixel de voisinage ;
- un troisième algorithme de traitement de changement d'espace couleur ALG3 pour passer de l'espace de couleurs RGB à l'espace d'impression CMYK dans un exemple non limitatif, tel que dans un exemple non limitatif une interpolation trilinéaire. Ce quatrième algorithme de traitement n'utilise aucun pixel de voisinage ;
- et un quatrième algorithme de traitement de tramage d'image ALG4 pour s'ajuster à la résolution du scanner par exemple, tel que dans un exemple non limitatif un tramage par matrice à points rapprochés ou dispersés. Ce quatrième algorithme de traitement n'utilise aucun pixel de voisinage.
On notera que ces quatre algorithmes sont les quatre algorithmes de base utilisés dans la copie locale (impression à partir d'un scanner). Cela permet de limiter les défauts d'impression (filtrage), et de formater l'image pour l'impression : résolution (redimensionnement), couleur (CMYK), et nombre de bits par pixel (tramage)
Deux doubles mémoires tampons DBUF sont associées respectivement à chaque algorithme de traitement ALG, et une double mémoire tampon DBUF est partagée entre deux algorithmes de traitement ALG qui sont appliqués successivement. Ainsi, on peut voir que l'on a au total cinq doubles mémoires tampons DBUF1 à DBUF4 dans l'exemple non limitatif de la figure 7.

Un exemple non limitatif des étapes décrites précédemment effectuées lors de l'exécution des quatre algorithmes de traitement ALG est illustré sur la figure 8. On notera que par un souci de concision, dans le schéma, les sauvegardes des colonnes CL des différents blocs Bi dans la deuxième mémoire RAMINT ne sont ni illustrés, ni décrits, mais qu'elles interviennent de la même façon que celles décrites dans l'exemple décrit précédemment de la figure 6.

Comme on peut le voir dans cet exemple,
- **Lors d'un premier temps t0,** l'image source IS est sauvegardée dans la première mémoire RAMEXT ;
- **Lors d'un deuxième temps t1,** le premier bloc B1 de la première ligne de bloc Lb1 est lu à partir de la première mémoire RAMEXT et sauvegardé dans la double mémoire tampon d'entrée DBUF1 ;
- **Lors d'un troisième temps t2**, le deuxième bloc B2 de la première ligne de bloc Lb1 est lu à partir de la première mémoire RAMEXT et sauvegardé dans la double mémoire tampon d'entrée DBUF1 ;
- Lors de ce même troisième temps t2, on applique un premier algorithme de traitement ALG1 à la région de traitement R1 du premier bloc sauvegardé B1 dans la double mémoire tampon DBUF1 et on sauvegarde le bloc traité B1' résultant dans la double mémoire tampon de sortie DBUF2 ;
- **Lors d'un quatrième temps t3,** un troisième bloc B3 de la première ligne de bloc Lb1 est lu à partir de la première mémoire RAMEXT et sauvegardé dans la double mémoire tampon d'entrée DBUF1 ;
- Lors de ce même quatrième temps t3, on applique le premier algorithme de traitement ALG1 à la région de traitement R1 du deuxième bloc sauvegardé B2 dans la double mémoire tampon DBUF1, en utilisant une première colonne sauvegardée CL1, et on sauvegarde le bloc traité B2' résultant dans la double mémoire tampon de sortie DBUF2 ;
- Lors de ce même quatrième temps t3, on applique le deuxième algorithme de traitement ALG2 à la région de traitement R1 du premier bloc traité B1' précédemment par l'algorithme de traitement ALG1 et sauvegardé dans la double mémoire tampon DBUF2 et on sauvegarde le bloc traité B1" résultant dans la double mémoire tampon de sortie DBUF3 ;
- **Lors d'un cinquième temps t4**, un quatrième bloc B4 de la première ligne de bloc Lb1 est lu à partir de la première mémoire RAMEXT et sauvegardé dans la double mémoire tampon d'entrée DBUF1 ;
- Lors de ce même cinquième temps t4, on applique le premier algorithme de traitement ALG1 à la région de traitement R1 du troisième bloc sauvegardé B3 dans la double mémoire tampon DBUF1, en utilisant une deuxième colonne sauvegardée CL2, et on sauvegarde le bloc traité B3' résultant dans la double mémoire tampon de sortie DBUF2 ;
- Lors de ce même cinquième temps t4, on applique le deuxième algorithme de traitement ALG2 à la région de traitement R1 du deuxième bloc traité B2' précédemment par l'algorithme de traitement ALG1 et sauvegardé dans la double mémoire tampon DBUF2, en utilisant une première colonne sauvegardée CL1 et on sauvegarde le bloc traité B2" résultant dans la double mémoire tampon de sortie DBUF3 ;
- Lors de ce même cinquième temps t4, on applique le troisième algorithme de traitement ALG3 à la région de traitement R1 du premier bloc traité B1" précédemment par le deuxième algorithme de traitement ALG2 et sauvegardé dans la double mémoire tampon DBUF3 et on sauvegarde le bloc traité B1"' résultant dans la double mémoire tampon de sortie DBUF4 ;
- **Lors d'un sixième temps t5**, un cinquième bloc B5 de la première ligne de bloc Lb1 est lu à partir de la première mémoire RAMEXT et sauvegardé dans la double mémoire tampon d'entrée DBUF1 ;
- Lors de ce même sixième temps t5, on applique le premier algorithme de traitement ALG1 à la région de traitement R1 du quatrième bloc sauvegardé B4 dans la double mémoire tampon DBUF1, en utilisant une troisième première colonne sauvegardée CL3, et on sauvegarde le bloc traité B4' résultant dans la double mémoire tampon de sortie DBUF2 ;
- Lors de ce même sixième temps t5, on applique le deuxième algorithme de traitement ALG2 à la région de traitement R1 du troisième bloc traité B3' précédemment par l'algorithme de traitement ALG1 et sauvegardé dans la double mémoire tampon DBUF2, en utilisant une deuxième colonne sauvegardée CL2, et on sauvegarde le bloc traité B3" résultant dans la double mémoire tampon de sortie DBUF3 ;
- Lors de ce même sixième temps t5, on applique le troisième algorithme de traitement ALG3 à la région de traitement R1 du deuxième bloc traité B2" précédemment par le deuxième algorithme de traitement ALG2 et sauvegardé dans la double mémoire tampon DBUF3 et on sauvegarde le bloc traité B2"' résultant dans la double mémoire tampon de sortie DBUF4 ;
- Lors de ce même sixième temps t5, on applique le quatrième algorithme de traitement ALG4 à la région de traitement R1 du premier bloc traité B1"' précédemment par le troisième algorithme de traitement ALG3 et sauvegardé dans la double mémoire tampon DBUF4 et on sauvegarde le bloc traité B1"" résultant dans la double mémoire tampon de sortie DBUF5 ;
- **Lors d'un septième temps t6**, un sixième bloc B6 de la première ligne de bloc Lb1 est lu à partir de la première mémoire RAMEXT et sauvegardé dans la double mémoire tampon d'entrée DBUF1 ;
- Lors de ce même septième temps t6, on applique le premier algorithme de traitement ALG1 à la région de traitement R1 du cinquième bloc sauvegardé B5 dans la double mémoire tampon DBUF1, en utilisant une quatrième colonne sauvegardée CL4, et on sauvegarde le bloc traité B5' résultant dans la double mémoire tampon de sortie DBUF2 ;
- Lors de ce même septième temps t6, on applique le deuxième algorithme de traitement ALG2 à la région de traitement R1 du quatrième bloc traité B4' précédemment par l'algorithme de traitement ALG1 et sauvegardé dans la double mémoire tampon DBUF2, en utilisant une troisième colonne sauvegardée CL3, et on sauvegarde le bloc traité B4" résultant dans la double mémoire tampon de sortie DBUF3 ;
- Lors de ce même septième temps t6, on applique le troisième algorithme de traitement ALG3 à la région de traitement R1 du troisième bloc traité B3" précédemment par le deuxième algorithme de traitement ALG2 et sauvegardé dans la double mémoire tampon DBUF3 et on sauvegarde le bloc traité B3"' résultant dans la double mémoire tampon de sortie DBUF4 ;
- Lors de ce même septième temps t6, on applique le quatrième algorithme de traitement ALG4 à la région de traitement R1 du deuxième bloc traité B2"' précédemment par le troisième algorithme de traitement ALG3 et sauvegardé dans la double mémoire tampon DBUF4 et on sauvegarde le bloc traité B2"" résultant dans la double mémoire tampon de sortie DBUF5 ;
- Lors de ce même septième temps t6, on lit le premier bloc traité B1"" précédemment par le quatrième algorithme de traitement ALG4 et sauvegardé dans la double mémoire tampon de sortie DBUF5, et on le sauvegarde dans la première mémoire RAMEXT.
- Etc.
- et ainsi de suite pour tous les blocs de la première ligne L1.

Lorsque les régions de traitement R1 de tous les blocs de la première ligne L1 ont été traitées, on passe à la ligne suivante L2 et ainsi de suite pour toutes les lignes de blocs Lbj de l'image source IS.

Ainsi, comme on peut le voir, six blocs B sont traités en parallèle entre les différents algorithmes de traitement ALG ce qui permet d'accélérer le temps d'exécution global de l'image source IS et de limiter les accès à la première mémoire.

Ainsi, le procédé de traitement d'images permet de réduire le temps d'exécution d'un algorithme de traitement.

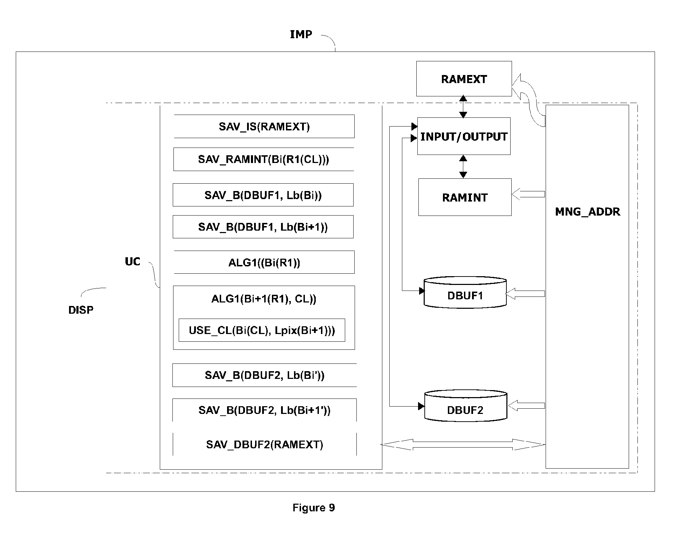

Le procédé de traitement décrit est mis en oeuvre par un dispositif associé de traitement DISP d'une image source IS composée de pixels pour imprimante multifonctions, tel qu'illustré à la figure 9.

Ce dispositif DISP est intégré dans un produit multifonctions dans le cadre de l'application décrite, telle qu'une imprimante multifonctions IMP.

Ainsi, le dispositif DISP comporte notamment :
- Une unité de contrôle UC pour :
   - Sauvegarder l'image source IS dans une première mémoire RAMEXT;
   - Sauvegarder dans une double mémoire tampon d'entrée DBUF1 un bloc Bi d'une ligne de blocs Lb de l'image source IS ;
   - Sauvegarder dans une double mémoire tampon d'entrée DBUF1 un bloc Bi+1 adjacent d'une ligne de blocs Lb de l'image source IS ;
   - Sauvegarder dans une deuxième mémoire RAMINT une colonne de pixels CL d'une région de traitement R1 du bloc sauvegardé Bi ;
   - Appliquer un algorithme de traitement ALG1 à la région de traitement R1 du bloc sauvegardé Bi ;
   - Appliquer l'algorithme de traitement ALG1 à une région de traitement R1 du bloc adjacent sauvegardé Bi+1 en utilisant la colonne de pixels sauvegardée CL ; et
- Une double mémoire tampon de sortie DBUF2' pour sauvegarder :
   - le bloc traité Bi ; et
   - le bloc adjacent Bi+1.

Dans un mode de réalisation non limitatif, le dispositif comporte en outre :
- Un dispositif de lecture/écriture INPUT/OUPUT apte à coopérer avec la première mémoire RAMEXT ;
- Une double mémoire tampon d'entrée DBUF1 pour sauvegarder :
   - un bloc Bi d'une ligne de blocs Lb de l'image source IS apte à être utilisé en entrée d'un algorithme de traitement ALG1 ; et
   - un bloc Bi+1 adjacent d'une ligne de blocs Lb de l'image source IS apte à être utilisé en entrée d'un algorithme de traitement ALG1 ;
- Une deuxième mémoire RAMINT pour sauvegarder une colonne CL de pixels d'une région de traitement R1 du bloc sauvegardé Bi.

Dans des modes de réalisation non limitatifs, les mémoires présentent les caractéristiques suivantes :
- Le dispositif de lecture/écriture INPUT/OUPUT est également apte à coopérer avec la deuxième mémoire RAMINT et les doubles mémoires tampons DBUF1, DBUF2, DBUF3 etc. ;
- La première mémoire RAMEXT, la deuxième mémoire RAMINT et les doubles mémoires tampons DBUF sont des mémoires volatiles.
- La première mémoire RAMEXT est une mémoire à accès lent car elle utilise un protocole d'accès via un bus de données (non représenté). C'est une mémoire externe au dispositif de traitement DISP.
- Les autres mémoires sont des mémoires à accès rapides car elles utilisent uniquement des adressages par adresses donc la lecture/écriture est plus rapide que dans le cas d'un protocole d'accès. Ainsi, la première mémoire RAMEXT est d'accès plus lent que la deuxième mémoire RAMINT et que les doubles mémoires tampons DBUF.
- La deuxième mémoire RAMINT est une mémoire interne au dispositif de traitement DISP.

On notera que les mémoires tampons DBUF sont communément appelées en anglais (« buffer »).

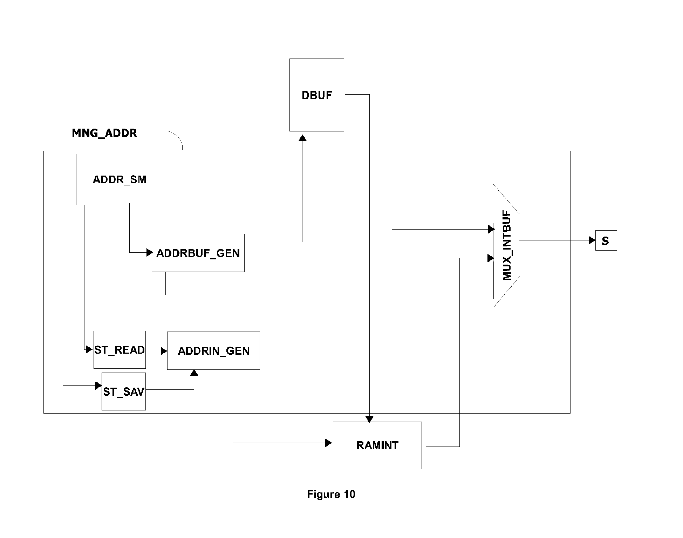

Dans des modes de réalisation non limitatifs, le dispositif DISP présente les caractéristiques suivantes :
- Le dispositif est un processeur de type ASIC, FPGA dans des exemples non limitatifs. Ce type de processeurs est plus rapide que des processeurs classiques ;
- Le dispositif DISP comporte en outre :
   - Un dispositif de gestion d'adresse MNG_ADDR, tel qu'illustré sur la figure 10 dans un mode de réalisation non limitatif, pour gérer les adressages pour les sauvegardes/lectures en première mémoire RAMEXT, deuxième mémoire RAMINT, doubles mémoires tampons DBUF,
      et notamment apte à :
      - gérer les adresses en mémoire ;
      - établir quand une colonne de pixels CL doit être sauvegardée dans la deuxième mémoire RAMINT et quand elle doit être lue pour être utilisée lors du traitement d'un bloc adjacent Bi+1 ;
      - établir quand un bloc de pixels Bi doit être sauvegardé dans une double mémoire tampon DBUF, et être envoyé en entrée d'un algorithme de traitement ALG ;
      et comprenant notamment :
      - un gestionnaire d'adresses ADDR_SM ;
      - un générateur d'adresses tampons ADDRBUF_GEN ;
      - un multiplexeur d'adresses MUX_INTBUF pour transmettre des pixels issus des différentes mémoires ;
      - un générateur d'adresses internes ADDRINT_GEN ;
      - un premier marqueur START_SV pour marquer une fin de ligne de pixels Lpix;
      - un deuxième marqueur START_RD pour marquer le début d'un bloc suivant Bi.
   On notera que lors d'une instruction de lecture, les pixels lus sont envoyés à un algorithme de traitement via un bus de données S.

Par ailleurs, dans un mode de réalisation non limitatif, l'unité de contrôle UC est également apte à gérer les fonctions de :
- Sauvegarder l'image source IS dans la première mémoire RAMEXT;
- Sauvegarder dans une double mémoire tampon d'entrée DBUF1 un bloc Bi d'une ligne de blocs Lb de l'image source IS ;
- Sauvegarder dans une double mémoire tampon d'entrée DBUF1 un bloc Bi+1 adjacent d'une ligne de blocs Lb de l'image source IS ;
- Sauvegarder dans une deuxième mémoire RAMINT une colonne de pixels CL d'une région de traitement R1 du bloc sauvegardé Bi ;
- Sauvegarder dans une double mémoire tampon de sortie DBUF2 le bloc traité Bi' ;
- Sauvegarder dans une double mémoire tampon de sortie DBUF2 le bloc adjacent traité Bi+1'.

Ainsi, si on reprend l'exemple de la figure 6, le générateur d'adresses ADDRBUF_GEN génère une adresse de lecture du premier bloc B1. Le premier bloc B1 est lu dans ladite double mémoire tampon DBUF1 et envoyé par le multiplexeur MUX_INTBUF sur le bus de données S. Le premier algorithme ALG1 est appliqué au premier bloc B1.

Par ailleurs, le générateur d'adresses ADDRBUF_GEN contrôle le premier marqueur START_SV. Connaissant la fin de chaque ligne de pixels Lpix d'un bloc et le nombre de pixels par lignes de pixels, le premier marqueur START_SV contrôle à son tour le générateur d'adresses internes ADDRINT_GEN qui génère une adresse d'écriture dans la deuxième mémoire RAMINT pour sauvegarder la première colonne CL1 du premier bloc B1.

Ensuite, le générateur d'adresses ADDRBUF_GEN génère une adresse de lecture du deuxième bloc B2. Le deuxième bloc B2 est lu dans ladite double mémoire tampon DBUF1 et envoyé par le multiplexeur MUX_INTBUF sur le bus de données S. Le premier algorithme ALG1 est appliqué au deuxième bloc B2 en utilisant la première colonne CL1 sauvegardée dans la deuxième mémoire RAMINT. A cet effet, le gestionnaire d'adresses ADDR_SM contrôle le deuxième marqueur START_RD. Connaissant le début d'un bloc adjacent, ici le deuxième bloc B2, le deuxième marqueur contrôle à son tour le générateur d'adresses internes RAMINT qui génère l'adresse de lecture de la première colonne sauvegardée CL1. La première colonne CL1 est lue dans la deuxième mémoire RAMINT et envoyée par le multiplexeur MUX_INTBUF sur le bus de données S.

Bien entendu la description de l'invention n'est pas limitée à l'application, aux modes de réalisation et aux exemples décrits ci-dessus.
Ainsi, l'invention s'applique à des applications telles que des imprimantes multifonctions, mais encore à toute autre application nécessitant l'utilisation d'algorithme(s) utilisant des pixels de voisinage pour traiter un ensemble de pixels.
Ainsi, dans le cas du premier bloc, pour les premières colonnes de pixel limites Cpixl qui ne comportent pas de pixels de voisinage pixv, on peut appliquer le même principe que décrit pour les lignes de pixels limites Lpixl précédemment.
Enfin, on pourrait appliquer le même principe de sauvegarde dans la deuxième mémoire RAMINT pour des lignes de pixels de recouvrement Lpix que l'on a appliqué pour les colonnes CL, si suffisamment de mémoire est disponible.

Ainsi, l'invention décrite présente notamment les avantages suivants :
- Elle permet de réduire les accès à la première mémoire grâce à l'utilisation d'une deuxième mémoire et de doubles mémoires tampons, ces mémoires étant d'accès plus rapide qu'une première mémoire car n'utilisant pas de protocole de bus de données mais utilisant uniquement un adressage ;
- Elle permet d'accélérer le traitement global d'une image source grâce à la parallélisation de traitement de blocs ;
- Elle permet d'accélérer le traitement d'une image par plusieurs algorithmes successifs, grâce notamment à l'utilisation de doubles mémoires tampons partagées et au partage de l'image en blocs ;
- Elle permet de maximiser le nombre de pixels traités dans un bloc grâce à l'utilisation d'une colonne sauvegardée d'un bloc précédent, par rapport à une solution qui utilise un recouvrement de colonnes ;
- Elle permet de traiter toute l'image source et donc de n'avoir aucune perte d'informations par rapport à l'image source, grâce à l'utilisation d'une colonne sauvegardée et au recouvrement des lignes de blocs ;
- Elle permet d'accélérer le temps d'exécution global du traitement d'une image source car elle permet d'exécuter plusieurs algorithmes de traitement en parallèle sur différents blocs de pixels tout en traitant des pixels avec des pixels de voisinage. Ainsi, les algorithmes de traitement ne sont pas traités successivement sur toute l'image source comme dans le cas d'un processeur dédié au traitement d'image DSP (« Digital Signal Processor ») ;
- Elle permet de rendre les blocs d'image disponibles très rapidement en entrée d'un algorithme de traitement ;
- Elle permet de traiter plusieurs algorithmes en parallèle ;
- Elle permet d'utiliser un unique processeur et donc de diminuer l'emplacement physique nécessaire ;
- Elle permet de traiter de gros volume de données rapidement ;
- Elle permet de traiter notamment une image au format standard A4 très rapidement (notamment environ 120MPix/2sec avec un processeur à 60MHz, soit 1 pixel par cycle d'horloge traité), et
- Elle est simple à mettre en oeuvre.

## Revendications

1. Procédé de traitement d'une image source (IS) composée de pixels (Pix) pour imprimante multifonctions, **caractérisé en ce qu'**il comporte les étapes de :
- Sauvegarder l'image source (IS) dans une première mémoire (RAMEXT) ;
- Sauvegarder dans une double mémoire tampon d'entrée (DBUF1) un bloc (Bi) d'une ligne de blocs (Lb) de l'image source (IS) ;
- Sauvegarder dans une double mémoire tampon d'entrée (DBUF1) un bloc (Bi+1) adjacent d'une ligne de blocs (Lb) de l'image source (IS) ;
- Sauvegarder dans une deuxième mémoire (RAMINT) une colonne de pixels (CL) d'une région de traitement (R1) du bloc sauvegardé (Bi) ;
- Appliquer un algorithme de traitement (ALG1) à la région de traitement (R1) du bloc sauvegardé (Bi) ; et
- Appliquer l'algorithme de traitement (ALG1) à une région de traitement (R1) du bloc adjacent sauvegardé (Bi+1) en utilisant la colonne de pixels sauvegardée (CL).

2. Procédé de traitement selon la revendication 1, **caractérisé en ce qu'**il comporte une sous-étape supplémentaire d'utiliser au moins un pixel de la colonne de pixels sauvegardée (CL) pour traiter un pixel d'une ligne de pixels (Lpix) du bloc adjacent (Bi+1) lorsque ce dernier est traité par l'algorithme de traitement (ALG1).

3. Procédé de traitement selon la revendication 1 ou 2, **caractérisé en ce que** la région de traitement (R1) d'un bloc adjacent (Bi+1) est adjacente à la région de traitement (R1) d'un bloc (Bi).

4. Procédé de traitement selon l'une au moins des revendications précédentes, **caractérisé en ce que** l'étape de sauvegarde dans une double mémoire tampon d'entrée (DBUF1) d'un bloc adjacent (Bi+1) s'effectue en parallèle de l'étape d'application d'un algorithme de traitement (ALG1) à la région de traitement (R1) d'un bloc (Bi).

5. Procédé de traitement selon l'une au moins des revendications précédentes, **caractérisé en ce qu'**il comporte une étape supplémentaire de lire une ligne de pixels (Lpix) d'une ligne de blocs adjacente (Lbj+1) appartenant également à la ligne de blocs (Lbj).

6. Procédé de traitement selon l'une au moins des revendications précédentes, **caractérisé en ce qu'**il comporte en outre les étapes supplémentaires de :
- Sauvegarder dans une double mémoire tampon de sortie (DBUF2) le bloc traité (Bi') ; et
- Sauvegarder dans une double mémoire tampon de sortie (DBUF2) le bloc adjacent traité (Bi+1').

7. Procédé de traitement selon l'une au moins des revendications précédentes, **caractérisé en ce qu'**une double mémoire tampon (DBUF) est partagée entre un algorithme de traitement (ALG1) et un autre algorithme de traitement (ALG2).

8. Dispositif de traitement (DISP) d'une image source (IS) composée de pixels (Pix) pour imprimante multifonctions, **caractérisé en ce qu'**il comporte :
- Une unité de contrôle (UC) pour :
- Sauvegarder l'image source (IS) dans une première mémoire (RAMEXT) ;
- Sauvegarder dans une double mémoire tampon d'entrée (DBUF1) un bloc (Bi) d'une ligne de blocs (Lb) de l'image source (IS) ;
- Sauvegarder dans une double mémoire tampon d'entrée (DBUF1) un bloc (Bi+1) adjacent d'une ligne de blocs (Lb) de l'image source (IS) ;
- Sauvegarder dans une deuxième mémoire (RAMINT) une colonne de pixels (CL) d'une région de traitement (R1) du bloc sauvegardé (Bi) ;
- Appliquer un algorithme de traitement (ALG1) à la région de traitement (R1) du bloc sauvegardé (Bi) ;
- Appliquer l'algorithme de traitement (ALG1) à une région de traitement (R1) du bloc adjacent sauvegardé (Bi+1) en utilisant la colonne de pixels sauvegardée (CL).

9. Dispositif de traitement selon la revendication précédente, **caractérisé en ce qu'**il comporte en outre une double mémoire tampon de sortie (DBUF2') pour sauvegarder :
- Le bloc traité (Bi) ; et
- Le bloc adjacent (Bi+1).

10. Dispositif de traitement selon l'une des revendications précédentes 8 ou 9, **caractérisé en ce que** la région de traitement (R1) d'un bloc adjacent (Bi+1) est adjacente à la région de traitement (R1) d'un bloc (Bi).

11. Dispositif de traitement selon l'une au moins des revendications précédentes 8 à 10, **caractérisé en ce qu'**il comporte en outre une double mémoire tampon (DBUF) partagée entre l'algorithme de traitement (ALG1) et un autre algorithme de traitement (ALG2).

12. Dispositif de traitement selon l'une au moins des revendications précédentes 8 à 11, **caractérisé en ce qu'**il comporte en outre :
- Un dispositif de lecture/écriture (INPUT/OUPUT) apte à coopérer avec une première mémoire (RAMEXT) de sauvegarde de l'image source (IS) ;
- Une double mémoire tampon d'entrée (DBUF1) pour sauvegarder :
- Un bloc (Bi) d'une ligne de blocs (Lb) de l'image source (IS) ; et
- Un bloc (Bi+1) adjacent d'une ligne de blocs (Lb) de l'image source (IS) ; et
- Une deuxième mémoire (RAMINT) pour sauvegarder une colonne (CL) de pixels d'une région de traitement (R1) du bloc sauvegardé (Bi).
